## Europäisches Patentamt
## European Patent Office
## Office européen des brevets

(19)

(11) Numéro de publication : **0 290 556 B1**

(12) ## FASCICULE DE BREVET EUROPEEN

(45) Date de publication du fascicule du brevet :
**27.02.91 Bulletin 91/09**

(51) Int. Cl.⁵ : **A01B 33/02, A01B 35/18, A01B 49/02, A01B 33/10**

(21) Numéro de dépôt : **87907778.2**

(22) Date de dépôt : **23.11.87**

(86) Numéro de dépôt international :
**PCT/FR87/00459**

(87) Numéro de publication internationale :
**WO 88/03746 02.06.88 Gazette 88/12**

(54) **INSTRUMENT COMBINE DE BROYAGE, DE DEFRICHAGE, DE DECOMPACTAGE ET DE TRAVAIL DU SOL.**

(30) Priorité : **27.11.86 FR 8616704**
**26.12.86 FR 8618320**

(43) Date de publication de la demande :
**17.11.88 Bulletin 88/46**

(45) Mention de la délivrance du brevet :
**27.02.91 Bulletin 91/09**

(84) Etats contractants désignés :
**AT BE CH DE FR GB IT LI LU NL SE**

(56) Documents cités :
**EP-A- 0 200 578**
**DE-A- 3 326 236**
**DE-U- 7 820 211**
**FR-A- 389 023**
**FR-A- 560 581**
**US-A- 2 886 117**

(56) Documents cités :
**US-A- 3 185 220**
**US-A- 3 233 686**
**US-A- 4 256 183**
**US-A- 4 611 669**
**Derwent Soviet Invention Illustrated, week
K42, 30 November 1983 & SU-A-982555**

(73) Titulaire : **SOCIETE SARA 2000**
**Chaumontagne**
**F-08220 Chaumont-Porcien (FR)**

(72) Inventeur : **SARAZIN, Guy**
**Chaumontagne**
**F-08220 Chaumont-Porcien (FR)**

(74) Mandataire : **Gérardin, Robert Jean René
PROT'INNOV INTERNATIONAL SA Résidence
de l'Observatoire avenue Georges
Clémenceau Boîte Postale 2764
F-51066 Reims Cédex (FR)**

EP 0 290 556 B1

Jouve, 18, rue Saint-Denis, 75001 PARIS

## Description

L'invention concerne un instrument combiné de broyage de défrichage, de décompactage et de travail du sol du type défini dans le préambule de la revendication 1. Un tel instrument est décrit dans le EP-A-0200578. Le broyage, le défrichage, le décompactage et le travail du sol, peuvent aussi être effectués séparément, en utilisant des moyens spécifiques.

Le broyage est effectué en utilisant des rotors, munis de couteaux mobiles, ou des fraises rotatives, entraînés par la prise de force du tracteur. Le défrichage est généralement effectué à l'aide de houes rotatives mues par la prise de force du tracteur, d'outils à disques, de canadiens lourds ou de chisels tractés.

Le décompactage et le travail du sol sont effectués à l'aide d'instruments combinant des dents avec des outils aratoires tournants, solidaires d'un arbre transversal, entraîné en rotation par la prise de force du tracteur. Ces instruments, compte-tenu de leur conception, sont limités au travail du sol après labour, afin d'affiner le sol pour le semage.

La présente invention a pour but d'obtenir, avec un même instrument et en un seul passage, le broyage ou le défrichage, le décompactage et le travail du sol tout en conservant la possibilité d'effectuer chacune de ces opérations séparément en n'effectuant que des réglages très simples.

Cette invention se caractérise principalement en ce que des outils aratoires tournants, de grand et de petit diamètre, sont combinés en un rotor, de façon que les outils de grand diamètre soient situés entre les dents et que les outils de petit diamètre soient situés dans les plans matérialisés par celles-ci, en ce que les dents sont reliées au châssis de l'instrument par l'intermédiaire d'une chape, d'un axe de pivotement et d'un dispositif de sécurité permettant leur effacement au delà d'un couple déterminé, en ce que le rotor est surplombé par un carter de faible profondeur faisant partie intégrante du châssis de l'instrument et en ce que le châssis de l'instrument est équipé, devant le rotor, d'une barre niveleuse et, derrière les dents, d'une plaque de nivelage articulée.

Le profil de la partie avant des dents, formant contre-lames de broyage, est constitué, à la partie supérieure, d'un arc de cercle dont le centre est situé sur l'axe du rotor et dont le rayon est un peu supérieur au rayon minimum de travail des outils aratoires tournants de petit diamètre, et, à la partie inférieure, d'un arc de cercle de même rayon que celui de la partie supérieure, mais dont le centre est situé sur un axe parallèle à l'axe du rotor, mais décalé vers le bas, dans le plan vertical passant par ledit axe, d'une distance déterminée, afin d'obtenir un resserrement progressif de la distance séparant la partie avant des dents des couteaux de l'outil aratoire tournant de petit diamètre.

Les dents sont équipées d'un soc interchangeable, formant un angle de rupture par rapport à la tangente à l'arc de cercle inférieur du profil de la partie avant des dents. Ces socles interchangeables sont encastrés dans le pied des dents et fixés par vis contre celles-ci. Leur arête travaillante est située entièrement devant le plan vertical passant par l'axe du rotor.

Les outils aratoires tournants de petit diamètre, situés dans le plan des dents, sont constitués essentiellement de flasques à la périphérie desquelles sont montés des couteaux de broyage à partie travaillante, vrillée selon une hélice de pas déterminé en fonction du sens de rotation du rotor, inclinée latéralement et alternativement à gauche et à droite des flasques.

Ces couteaux de broyage sont fixés sur le côté de leur flasque d'entraînement opposé au sens d'inclinaison de leur partie travaillante.

Selon un autre mode de réalisation des outils aratoires tournants de petit diamètre, ceux-ci sont constitués, essentiellement, de flasques à la périphérie desquels sont montés des ensembles de deux couteaux de broyage à partie travaillante vrillée selon des hélices déterminées, de pas opposés, inclinée latéralement dans des directions opposées.

Selon un autre mode de réalisation des outils aratoires tournants de petit diamètre, les couteaux de broyage ou les ensembles de couteaux de broyage, sont montés articulés par rapport à leur flasque d'entraînement.

Selon un autre mode de réalisation des outils aratoires tournants de petit diamètre, les couteaux de broyage fixes, simples ou doubles, sont montés en alternance avec des couteaux simples ou doubles, articulés sur le même flasque d'entraînement.

Les outils aratoires tournants de grand diamètre, travaillant entre les dents, sont constitués essentiellement de flasques à la périphérie desquels sont montés alternativement des couteaux malaxeurs et des couteaux racleurs, à partie travaillante vrillée selon une hélice de pas déterminé en fonction du sens de rotation du rotor, inclinée latéralement alternativement à droite et à gauche du flasque. L'extrémité de la partie travaillante des couteaux malaxeurs décrit un cercle de rayon sensiblement égal à celui de l'arc de cercle correspondant au profil de la partie arrière des dents. La longueur et l'inclinaison de la partie travaillante des couteaux racleurs sont déterminées de façon que l'extrémité de celle-ci passe aussi près que possible des dents. Les couteaux malaxeurs sont inclinés latéralement selon différents angles de façon à obtenir une coupe complète du sol entre les dents.

L'extrémité des couteaux de broyage des outils aratoires tournants de petit diamètre pénètre dans l'espace de travail des couteaux racleurs des outils aratoires tournants de grand diamètre.

Selon un mode de réalisation particulier du rotor, plusieurs outils rotatifs tournants de grand diamètre sont situés dans l'intervalle des dents.

Les flasques des outils aratoires tournants de petit diamètre sont décalées angulairement, par rapport aux flasques de l'outil aratoire tournant de grand diamètre le plus proche, de la moitié de l'angle formé par deux couteaux consécutifs du même outil, alors que les flasques des outils aratoires tournants de petit diamètre, ainsi que ceux des outils aratoires tournants de grand diamètre sont, respectivement, décalés régulièrement de proche en proche dans le même sens, afin que les couteaux correspondants soient situés sur des hélices.

Selon un mode de réalisation particulier de l'invention les outils aratoires tournants sont fixés obliquement sur leur arbre d'entraînement.

L'extrémité supérieure des dents est située à l'extrémité d'un arc d'environ 30° par rapport au plan horizontal passant par l'axe du rotor et est située au dessus de ce plan, mais en dessous de celui passant par l'axe d'articulation de la chape d'articulation des dents.

Les dents sont, selon un mode de réalisation particulier de l'invention, prolongées vers la partie supérieure du carter par des nervures.

La position de l'arbre du rotor peut être réglable par rapport aux dents.

Des dents de plus grande longueur peuvent être montées parmi les autres.

Les avantages obtenus grâce à cette invention, consistent essentiellement en ceci, que les opérations de broyage ou de défrichage, de décompactage et de travail du sol peuvent être, à volonté, effectuées simultanément ou sélectivement à des vitesses appropriées au résultat recherché, par l'intermédiaire d'adaptation ou de réglages simples, afin d'obtenir un travail complet du sol tout en broyant finement et en mélangeant intimement les particules de chaume à la terre en limitant les dépenses d'énergie.

D'autres caractéristiques et avantages apparaîtront dans la description qui va suivre d'un instrument selon l'invention, comportant un rotor équipé d'outils aratoires tournants à quatre couteaux fixés radialement sur leur flasque d'entraînement, donné à titre d'exemple non limitatif au regard des dessins annexés, sur lesquels :

    – la figure 1 représente une vue de côté de l'ensemble de l'instrument,

    – la figure 2 représente une vue de côté partielle de l'instrument,

    – la figure 3 représente une vue de face partielle de l'instrument,

Les figures représentent un instrument combiné de broyage ou de défrichage, de décompactage et de travail du sol, comprenant essentiellement : un châssis 1, relié au tracteur par l'intermédiaire d'un attelage "trois points" 2, sous lequel sont fixés, par l'intermédiaire de chapes 17, d'axes de pivotement 3 et de boulons de sécurité 4, des dents rigides 5 équipées d'un soc interchangeable 6, par l'intermédiaire d'un arbre 7, des outils rotatifs tournants de grand diamètre 9, constitués de flasques 20 munis de couteaux racleurs 21 et malaxeurs 22, travaillant entre les dents 5 et des outils rotatifs tournants de petit diamètre 8 constitués de flasques 23 munis de couteaux de broyage 24 travaillant dans le plan des dents 5, dans une face avant 5a formant contre-lames de broyage, réalisée à l'avant de celles-ci, par l'intermédiaire de bras articulés 10, à position réglable par un axe 11, un rouleau de terrage 12 et une plaque de nivellement articulée 13, à l'avant duquel est montée une barre de nivellement 25 et, à l'arrière duquel, est monté un dispositif de relevage hydraulique 14 permettant l'association avec différents équipements tels que semoir, pulvérisateur, fertiliseur etc... Le rotor est surmonté d'un carter 15.

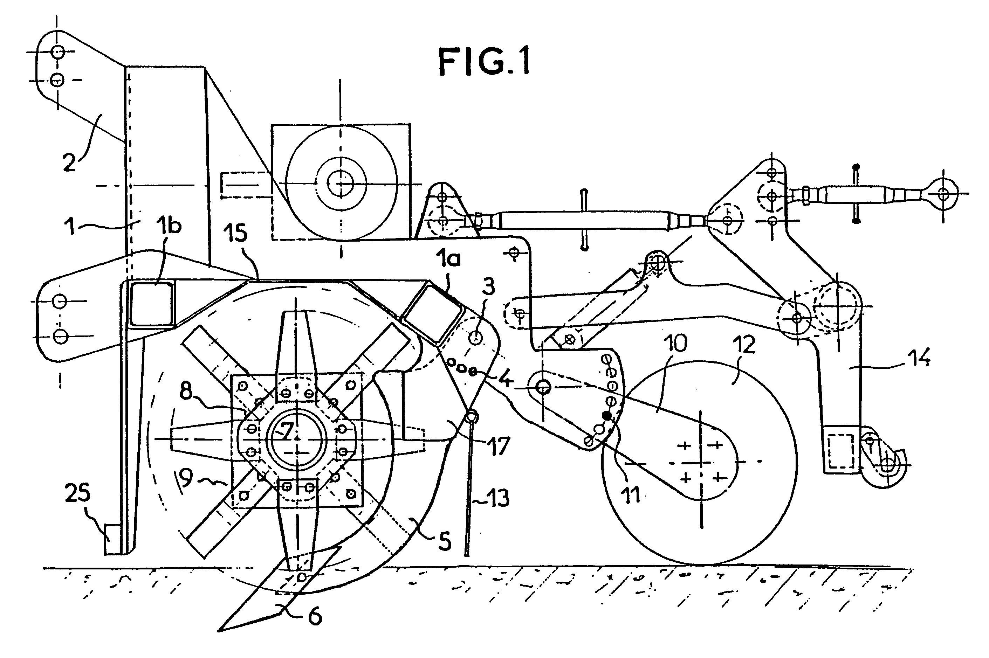

En examinant plus particulièrement la figure 1, on remarque que l'ensemble tournant, constitué de l'arbre 7 équipé des outils rotatifs tournants 8 et 9 forme, ainsi un rotor à double flux alors que les dents à angle d'attaque réglable, servent de contre-couteaux à ce rotor broyeur entraîné par la prise de force du tracteur.

Ainsi les outils rotatifs tournants de petit diamètre 8 constitués de flasques 23 munis de couteaux de broyage 24, intercalés entre les outils rotatifs tournants de grand diamètre 9, tournent devant chaque dent rigide 5. L'intervalle existant entre les outils rotatifs tournants de grand diamètre 9 doit être égal à celui des outils rotatifs tournants de petit diamètre 8, et à celui existant entre les dents 5. Les couteaux peuvent être de différentes formes et être fixés par différents moyens tels que : boulons, axes etc... La répartition circulaire des couteaux autour de l'arbre 7 peut être en hélice, en ligne droite, en quinconce, etc...

La combinaison de ces moyens permet de faire tourner la matière organique ou les déchets végétaux deux fois autour du rotor ; lequel, par l'intermédiaire des outils rotatifs tournants de petit diamètre 8, broie les déchets végétaux par resserrement progressif contre la face avant 5a des dents et des outils rotatifs tournants de grand diamètre 9, assure l'éjection puis le mélange de ceux-ci dans le sol.

Les dents rigides 5 ont, pour ce faire, un profil et une inclinaison bien particulière, déterminés en fonction de la qualité du travail désiré. Ainsi, le soc interchangeable 6 attaque le sol en formant un angle de rupture alpha avec la dent support. Cet angle alpha est déterminant, car la terre, soulevée par le soc 6, est, en atteignant le haut de celui-ci, projetée par les couteaux de broyage 24 sur la face avant 5a de la dent 5, contre laquelle elle est progressivement resserrée pour poursuivre le broyage des déchets organiques et transférer ceux-ci vers la partie supérieure du carter 15, afin de les recycler pour un deuxième passage, en évitant le bourrage sur les dents 5 et sur l'arbre 7, grâce à l'action des couteaux racleurs 21.

Les dents **5** servent donc, ainsi, de contre-lames de broyage et de guide de recyclage de la matière organique insuffisamment pulvérisée, tout en servant aussi de râteau de ramassage des déchets organiques et d'outils de décompaction du sol. Des dents **18**, de plus grande longueur, utilisées comme dents soussoleuses, peuvent être, sans inconvénient, réparties régulièrement parmi les autres dents **5**.

Les dents **5** sont fixées sur un profilé creux **1a**, constituant la partie inférieure arrière du châssis, par l'intermédiaire de chapes **17**, d'axes de pivotement **3** et de boulons de sécurité **4** qui permettent aussi le réglage de l'angle d'attaque bêta des socs **6** des dents **5** et le réglage de l'écartement de ces dernières par rapport au diamètre de travail de l'outil aratoire tournant de petit diamètre **8** du rotor broyeur. Ainsi, plus les dents sont abaissées, plus l'angle d'attaque bêta est grand et plus le recyclage est important.

Le dispositif de sécurité, permettant l'effacement des dents en cas de couple trop important, peut être constitué d'un système à ressort ou hydraulique bien connu de l'homme de métier ; systèmes qui offrent l'avantage de permettre un retour immédiat de la dent dès que le couple redevient normal.

Le rotor broyeur est entraîné en rotation par la prise de force du tracteur mettant en oeuvre l'instrument. Cette transmission peut être mécanique, par chaînes ou par pignons, et faire intervenir une boîte de vitesses. Cette transmission peut être hydraulique. Le rotor tourne de préférence dans le sens d'avancement du tracteur à une vitesse de rotation adaptée au travail à effectuer, mais des résultats particuliers peuvent être obtenus en faisant tourner le rotor dans l'autre sens.

Un rouleau de terrage **12** est supporté par des bras articulés **10**, réglables en inclinaison par rapport au châssis **1** par l'intermédiaire d'axes **11**.

Ce rouleau assure le contrôle de la profondeur du travail, tout en assurant la mise en appui du lit de semence. Ce rouleau peut être remplacé par deux roues de jauge.

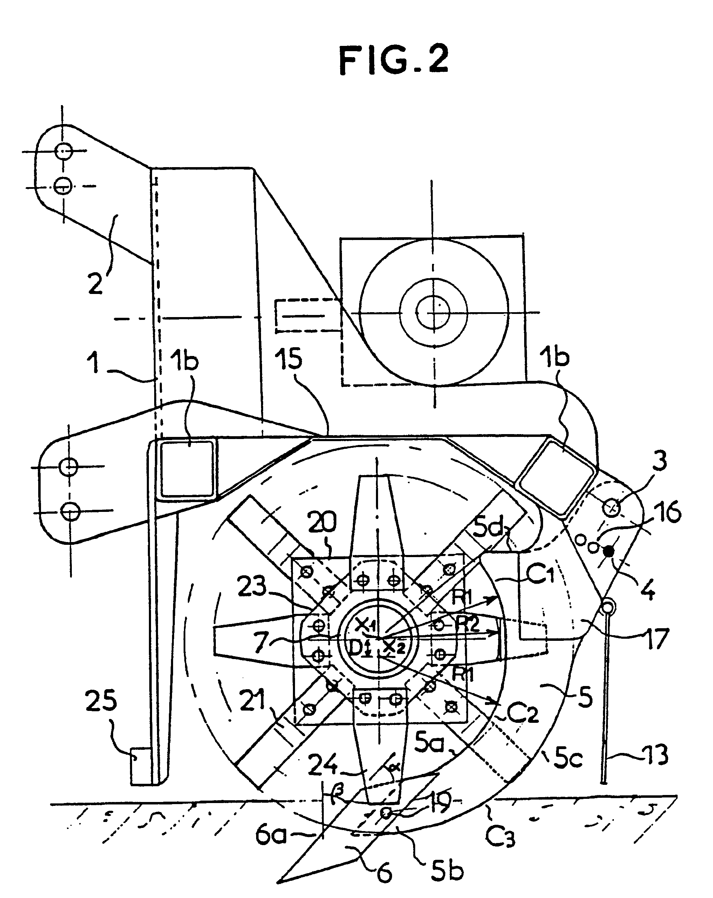

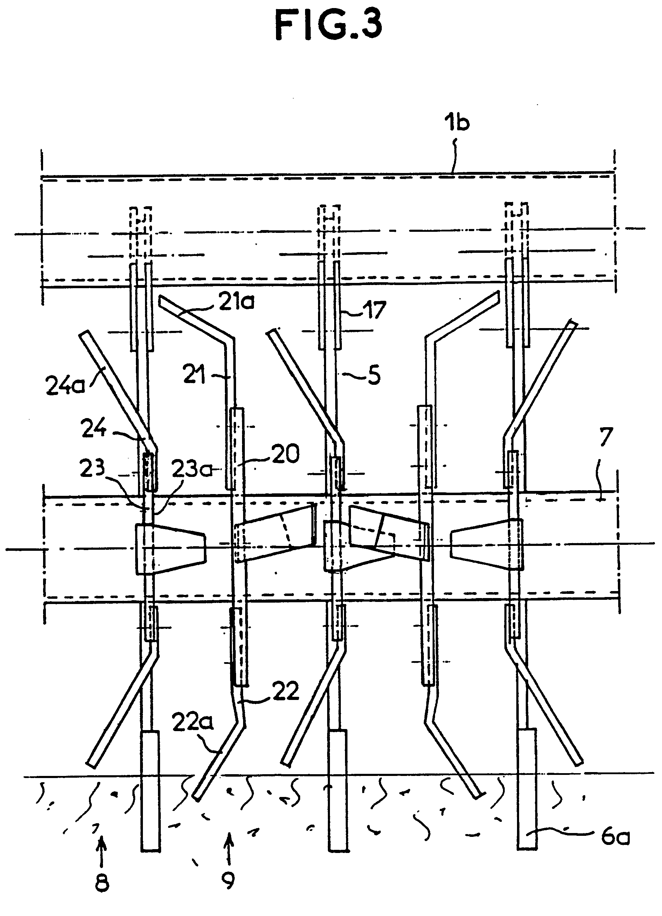

Comme on le voit en examinant plus particulièrement, les figures 2 et 3, le soc **6** est fixé à l'extrémité inférieure **5b** des dents **5**, par encastrement et solidarisation par vis **19**, facilitant le remplacement. L'arête travaillante **6a** du soc **6**, de préférence, est située entièrement en avant d'un plan vertical passant par l'axe ; mais elle peut être pour certaines utilisations, situées en arrière de ce plan.

Le châssis **1** est conçu pour recevoir un relevage arrière permettant l'association de divers équipements tels que semoir à grains, pulvérisateurs, etc... Le semoir pouvant lui être, dans un mode de réalisation particulier, entièrement intégré.

Comme on le voit sur ces figures 2 et 3 des dessins, le resserrement progressif des matières entre les couteaux de broyage **24** des outils rotatifs tournants **8** et la face avant **5a** des dents **5** est obtenu par un décalage **D** des centres des arcs de cercle **C1**, constituant le profil supérieur et **C2** constituant le profil inférieur des dents **5**. Les deux arcs de cercle **C1** et **C2** ayant tous deux un même rayon **R1** un peu supérieur à celui **R2** correspondent au rayon de travail minimum des couteaux de broyage **24**. Le décalage **D** des centres s'effectue dans le plan perpendiculaire passant par l'axe **X1** du rotor, afin que les centres des arcs de cercle inférieurs **C2** soient situés sur un axe **X2** parallèle à l'axe du rotor. Le profil de la partie arrière **5e** des dents **5** affecte la forme d'un arc de cercle **C3** dont le centre est situé sur l'axe **X1** du rotor et dont le rayon est voisin de celui du cercle décrit par l'extrémité de la partie travaillante **21a** des couteaux racleurs **21** des outils aratoires tournants de grand diamètre **9**. Cette disposition permet d'éliminer tout bourrage entre les dents **5** et contre le profilé creux **1a**.

La partie travaillante **21a** des couteaux racleurs **21**, de malaxage **22** et de broyage **24** est vrillée selon une hélice de pas déterminé en fonction du sens de rotation du rotor et inclinée latéralement, alternativement à gauche et à droite des flasques **20** et **23**.

En examinant plus particulièrement la figure 3, on remarque que, sur les outils aratoires tournants de petit diamètre **8**, les couteaux de broyage **24** sont fixés sur le côté **23a** ou **23b** de leur flasque d'entraînement **23** opposé au sens d'inclinaison de leur partie travaillante **24a**, ceci afin d'obtenir un croisement des parties travaillantes **24a** à la périphérie des flasques. Selon un mode de réalisation particulier de l'invention non représenté, les couteaux de broyage **24** sont solidarisés deux à deux, leurs parties travaillantes **24a** étant montées en opposition, puis fixées ou montées articulées à la périphérie des flasques ; ce dernier mode de montage multiplie l'effet obtenu par le croisement des parties travaillantes ci-dessus évoqué et renforce encore celui-ci par un effet de "marteau" bien connu dans les broyeurs. Des couteaux fixés, simples ou doubles peuvent bien évidemment, être combinés avec des couteaux articulés, simples ou doubles, pour obtenir des résultats particuliers. On remarquera aussi, sur la même figure, que les couteaux de malaxage **22** ont une partie travaillante **22a** plus inclinée que celle **21a** des couteaux racleurs **21**, afin que l'intervalle des dents **5** soit travaillé aussi finement que possible dans des plans parallèles suffisamment resserrés, et que la partie travaillante **24a** des couteaux de broyage **24** pénètre dans l'espace de travail des couteaux racleurs et de malaxage, ce qui facilite l'émiettement de la terre. Le passage de l'extrémité des parties travaillantes **21a** des couteaux racleurs **21** très près de l'emplanture des joues de chapes **17** permet, par ailleurs, d'éliminer tout bourrage dans cette zone.

L'extrémité supérieure **5d** des dents **5** est située à l'extrémité d'un arc d'environ 30° par rapport au plan horizontal passant par l'axe **X1** du rotor. Cette extrémité supérieure **5d** étant, cependant, suffisamment en dessous du niveau de l'axe de pivotement **3**, afin d'éviter tout blocage du rotor en cas d'effacement d'une dent ou d'augmentation de l'ouverture de celle-ci.

En se reportant à la figure **3**, on remarque que le carter **15** est de très faible profondeur, afin d'éviter tout calmatage de celui-ci. Il est constitué, en fait, d'une tôle d'acier pliée, soudée en travers du châssis entre les profilés **1a** et **1b** constituant les traverses de celui-ci.

La disposition des chapes **17**, soudées derrière la traverse profilée **1a**, et la position de l'axe d'articulation **3** et des orifices **16** de réglage de l'angle d'attaque bêta des dents **5** facilitent grandement

## Revendications

1. Instrument combiné de broyage, de défrichage, de décompactage et de travail du sol comportant des outils aratoires tournants de grand et de petit diamètres, solidaires d'un arbre **(7)** transversal entraîné en rotation par l'intermédiaire de la prise de force de l'engin tracteur, et des dents **(5)** à soc interchangeable fixées à un châssis **(1)**, venant s'intercaler entre les outils aratoires tournants, dont la profondeur de travail est déterminée par un rouleau de terrage **(12)** et de plombage ; lesdits outils aratoires tournants étant constitués de flasques **(20, 23)** à la périphérie desquels sont montés des couteaux **(21, 22, 24)** travaillant à des profondeurs différentes, caractérisé en ce que les outils aratoires tournants de grand et de petit diamètres, sont combinés en un rotor de façon que les outils de grand diamètre **(9)** soient situés entre les dents **(5)** et que les outils de petit diamètre **(8)** soient situés dans les plans matérialisés par celles-ci **(5)**, en ce que les dents **(5)** sont reliées au châssis **(1)** de l'instrument par l'intermédiaire d'une chape **(17)**, d'un axe de pivotement **(3)** et d'un dispositif de sécurité **(4)** permettant leur effacement au delà d'un couple déterminé, en ce que le rotor est surplombé par un carter **(15)** de faible profondeur faisant partie intégrante du châssis **(1)** de l'instrument et en ce que le châssis **(1)** de l'instrument est équipé, devant le rotor, d'une barre niveleuse **(25)** et derrière les dents **(5)**, d'une plaque de nivelage articulée **(13)**.

2. Instrument selon la revendication **1**, caractérisé en ce que le profil de la face avant **(5a)**, formant contre-lames de broyage, des dents **(5)** est constitué, à la partie supérieure, d'un arc de cercle **(C1)** dont les interventions sur le réglage, ou la remise en service des dents **5** après effacement, suite à la rupture du boulon de sécurité **4** par exemple.

Comme on le remarque tout particulièrement sur la figure **1**, l'instrument est conçu pour recevoir un relevage arrière **14** permettant l'association de divers équipements, tels que semoir à grains, pulvérisateurs, etc... Le semoir pouvant dans un mode de réalisation particulier, être directement intégré à l'instrument.

Le centre est situé sur l'axe **(X1)** du rotor et dont le rayon **(R1)** est un peu supérieur au rayon minimum de travail **(R2)** des outils aratoires tournants de petit diamètre **(8)** et, à la partie inférieure, d'un arc de cercle **(C2)** de même rayon **(R1)** que celui de la partie supérieure, mais dont le centre est situé sur un axe **(X2)**, parallèle à l'axe **(X1)** du rotor, décalé dans le plan vertical passant par ledit axe **(X1)** d'une distance **(D)**, afin d'obtenir un resserremen progressif de la distance séparant la face avant **(5a)** des dents **(5)** des couteaux de broyage **(24)** de l'outil aratoire tournant de petit diamètre **(8)**.

3. Instrument selon les revendications **1** et **2**, caractérisé en ce que l'arête travaillante **(6a)** du soc interchangeable **(6)** des dents **(5)** forme un angle de rupture alpha par rapport à la tangente à l'arc de cercle inférieur **(C2)** du profil de la face avant **(5a)** des dents **(5)**.

4. Instrument selon la revendication **1**, caractérisé en ce que l'arête travaillante **(6a)** du soc **(6)** est située entièrement devant le plan vertical passant par l'axe **(X1)** du rotor.

5. Instrument selon les revendications **1** et **3**, caractérisé en ce que les socs interchangeables **(6)** sont encastrés dans l'extrémité inférieure **(5b)** des dents **(5)** et fixés par vis **(19)** contre celles-ci.

6. Instrument selon la revendication **1**, caractérisé en ce que les outils aratoires tournants de petit diamètre **(8)**, situés dans le plan des dents **(5)**, sont constitués essentiellement de flasques **(23)** à la périphérie desquels sont montés des couteaux de broyage **(24)** à partie travaillante **(24a)**, vrillée selon une hélice, de pas déterminé en fonction du sens de rotation du rotor, inclinée latéralement et alternativement à gauche et à droite des flasques **(23)**.

7. Instrument selon la revendication **6**, caractérisé en ce que les couteaux de broyage **(24)** des outils aratoires tournants de petit diamètre **(8)** sont fixés sur le côté **(23a)** de leur flasque d'entraînement **(23)** opposé au sens d'inclinaison de leur partie travaillante **(24a)**.

8. Instrument selon la revendication **1**, caractérisé en ce que les outils aratoires tournants de petit diamètre **(8)**, situés dans le plan des dents **(5)**, sont constitués essentiellement de flasques **(23)** à la périphérie desquels sont montés des ensembles de deux couteaux de broyage, à parties travaillantes vrillées selon des hélices déterminées, de pas opposés, inclinées latéralement dans des directions opposées.

9. Instrument selon la revendication **6** ou **8**, caractérisé en ce que les couteaux de broyage, ou les ensembles de couteaux de broyage, sont montés articulés sur leur flasque d'entraînement.

10. Instrument selon la revendication **6**, **8** ou **9**, caractérisé en ce que des couteaux de broyage fixes, simples ou doubles, sont montés en alternance avec des couteaux de broyage simples ou doubles, articulés, sur le même flasque d'entraînement.

11. Instrument selon la revendication 1, caractérisé en ce que les outils aratoires tournants de grand diamètre (9), travaillant entre les dents (5), sont constitués essentiellement de flasques (20) à la périphérie desquels sont montés alternativement des couteaux malaxeurs (22) et des couteaux racleurs (21) à partie travaillante (21a et 22a), vrillée selon une hélice de pas déterminé en fonction du sens de rotation du rotor, inclinée latéralement, alternativement à droite et à gauche du flasque (20).

12. Instrument selon la revendication 11, caractérisé en ce que le rayon du cercle décrit par l'extrémité de la partie travaillante des couteaux racleurs (21) est voisin de celui de l'arc de cercle (C3) correspondant au profil de la partie arrière(5c) des dents (5).

13. Instrument selon la revendication 11, caractérisé en ce que la longueur et l'inclinaison de la partie travaillante (21a) des couteaux racleurs (21) des outils aratoires tournants de grand diamètre (9) est déterminée de façon que l'extrémité de celle-ci passe aussi près que possible des dents (5).

14. Instrument selon la revendication 11, caractérisé en ce que les couteaux de malaxage (22) sont inclinés latéralement selon différents angles, de façon à obtenir une coupe compléte du sol entre les dents (5).

15. Instrument selon les revendications 6 et 11, caractérisé en ce que l'extrémité des couteaux de broyage (24) des outils aratoires tournants de petit diamètre (8) pénètre dans l'espace de travail des couteaux racleurs (21) des outils aratoires tournants de grand diamètre (9).

16. Instrument selon la revendication 1, caractérisé en ce que l'extrémité supérieure (5a) des dents (5) est située à l'extrémité d'un arc d'environ 30° par rapport au plan horizontal, passant par l'axe (X1) du rotor, et est située au dessus de ce plan, mais en dessous du plan horizontal passant par l'axe de pivotement, (3) des dents (5).

17. Instrument selon la revendication 1, caractérisé en ce que plusieurs outils rotatifs tournants de grand diamètre (9) sont situés dans l'intervalle des dents (5).

18. Instrument selon la revendication 1, caractérisé en ce que des dents de plus grande longueur sont montées parmi les autres (5).

19. Instrument selon la revendication 1, caractérisé en ce que les flasques (20 et 23) des outils aratoires tournants de petit diamètre sont décalés angulairement de la moitié de l'angle formé par deux couteaux consécutifs du même outil par rapport au flasque de l'outil aratoire tournant de grand diamètre le plus proche.

20. Instrument selon la revendication 1, caractérisé en ce que les flasques (23) des outils aratoires tournants de petit diamètre (8) et ceux (20) des outils aratoires tournants de grand diamètre (9) sont respectivement décalés régulièrement, de proche en proche, dans le même sens, afin que les couteaux correspondants soient situés sur des hélices.

21. Instrument selon la revendication 1, caractérisé en ce que les dents (5) sont prolongées vers la partie supérieure du carter (15) par des nervures rapportées à l'intérieur de celui-ci.

22. Instrument selon la revendication 1, aractérisé en ce que la position de l'arbre d'entraînement (7) des outils rotatifs tournants (8 et 9) est réglable.

23. Instrument selon la revendication 1, caractérisé en ce que les outils rotatifs tournants (8 et 9) sont fixés obliquement sur leur arbre d'entraînement (7).

**Ansprüche**

1. Kombinationsgerät zum Zerkleinern, Urbarmachen, Lockern und Bearbeiten des Bodens, das umlaufende Ackerwerkzeuge mit großem und kleinem Durchmesser aufweist, die mit einer querliegenden Welle (7) verbunden sind, welche durch die Zapfwelle der Zugmaschine in Drehung versetzt wird, sowie Zähne (5) mit austauschbaren Pflugscharen, die an einem Rahmen (1) befestigt sind und die zwischen den umlaufenden Ackerwerkzeugen gelagert sind, deren Arbeitstiefe durch eine Glattwalze (12) für aufgeschüttete Muttererde bestimmt wird, wobei die umlaufenden Ackerwerkzeuge aus Flanschen (20, 23) bestehen, an deren Oberfläche Messer (21, 22, 24) angebracht sind, die in verschiedenen Tiefen arbeiten, **dadurch gekennzeichnet,**

– daß die umlaufenden Ackerwerkzeuge mit großem und kleinem Durchmesser derart zu einem Rotor zusammengefaßt sind, daß die Werkzeuge mit großem Durchmesser (9) zwischen den Zähnen (5) und die Werkzeuge mit dem kleinen Durchmesser (8) in den durch die Zähne (5) erzeugten Ebenen angeordnet sind,

– daß die Zähne (5) am Rahmen (1) des Gerätes durch eine Abdeckung (17), einen Schwenkbolzen (3) und eine Sicherheitsvorrichtung (4), die die Rückstellung der Zähne (5) bei Überschreitung eines bestimmten Moments ermöglicht, befestigt sind,

– daß der Rotor von einem Gehäuse (15) überdeckt wird, das eine geringe Tiefe aufweist und integrierter Bestandteil des Rahmens (1) des Gerätes ist, und

– daß der Rahmen (1) des Gerätes vor dem Rotor einen Erdschiebebalken (25) sowie hinter den Zähnen (5) eine schwenkbar gelagerte Nivellierungsplatte (13) aufweist.

2. Gerät nach Anspruch 1, **dadurch gekennzeichnet,** daß das Profil der Vorderseite (5a) der Zähne (5), die Gegenfräsmesser bildet, im oberen Teil aus einem Kreisbogen (C1) besteht, dessen Mittelpunkt auf der Achse (X1) des Rotors liegt und dessen Radius (R1) etwas größer ist als der kleinste Arbeitsradius (R2) der umlaufenden Ackerwerkzeuge mit kleinem Durchmesser (8), und im unteren Teil aus einem Kreisbogen (C2) besteht, der den gleichen Radius (R1) aufweist wie derjenige des oberen Teils, dessen Mittelpunkt aber auf einer Achse (X2) liegt, die parallel zur Achse (X1) des Rotors verläuft und in der vertikalen Ebene, die durch die Achse (X1) geht, um eine Distanz (D) verschoben ist, um eine zunehmende Verringerung der Distanz zu erreichen, die die Vorderseite (5a) der Zähne (5) von den Fräsmessern (24) des umlaufenden Werkzeugs mit kleinem Durchmesser (8) trennt.

3. Gerät nach Anspruch 1 und 2, **dadurch gekennzeichnet**, daß die Arbeitskante (6a) der austauschbaren Pflugschar (6) der Zähne (5) einen Bruchwinkel α bezüglich der Tangente zum kleineren Kreisbogen (C2) des Profils der Vorderseite (5a) der Zähne (5) bildet.

4. Gerät nach Anspruch 1, **dadurch gekennzeichnet**, daß die Arbeitskante (6a) der Pflugschar (6) vollständig vor der vertikalen Ebene, die durch die Achse (X1) des Rotors läuft, angeordnet ist.

5. Gerät nach Anspruch 1 und 3, **dadurch gekennzeichnet**, daß die austauschbaren Pflugscharen (6) in das untere Ende (5b) der Zähne (5) eingesetzt und durch Schrauben (19) an diesen befestigt sind.

6. Gerät nach Anspruch 1, **dadurch gekennzeichnet**, daß die umlaufenden Ackerwerkzeuge mit kleinem Durchmesser (8), die in der Ebene der Zähne (5) angeordnet sind, im wesentlichen von Flanschen (23) gebildet sind, an deren Oberflächen Fräsmesser (24) befestigt sind, die einen Arbeitsteil (24a) aufweisen, der in einer Schraubenlinie bewegt wird, deren Gang in Funktion der Drehrichtung des Rotors festgelegt ist, und der seitlich abwechselnd auf die linke und rechte Seite der Flansche (23) geneigt ist.

7. Gerät nach Anspruch 6, **dadurch gekennzeichnet**, daß die Fräsmesser (24) der umlaufenden Ackerwerkzeuge mit kleinem Durchmesser (8) auf der Seite (23a) ihres Antriebsflansches (23) befestigt sind, die der geneigten Seite ihres Arbeitsteils (24a) abgewandt ist.

8. Gerät nach Anspruch 1, **dadurch gekennzeichnet**, daß die umlaufenden Ackerwerkzeuge mit kleinem Durchmesser (8), die in der Ebene der Zähne (5) angeordnet sind, im wesentlichen von Flanschen (23) gebildet sind, an deren Oberflächen Konstruktionen aus zwei Fräsmessern angebracht sind, die Arbeitsteile aufweisen, welche in bestimmten Schraubenlinien mit entgegengesetztem Gang bewegt werden und seitlich in entgegengesetzte Richtungen geneigt sind.

9. Gerät nach Anspruch 6 oder 8, **dadurch gekennzeichnet**, daß die Fräsmesser oder die Konstruktionen aus den Fräsmessern schwenkbar an ihren Antriebsflanschen angebracht sind.

10. Gerät nach Anspruch 6, 8 oder 9, **dadurch gekennzeichnet**, daß feststehende einfache oder doppelte Fräsmesser abwechselnd mit einfachen oder doppelten ausschwenkbaren Fräsmessern an dem gleichen Antriebsflansch angebracht sind.

11. Gerät nach Anspruch 1, **dadurch gekennzeichnet**, daß die umlaufenden Ackerwerkzeuge mit großem Durchmesser (9), die zwischen den Zähnen (5) wirken, im wesentlichen von Flanschen (20) gebildet sind, an deren Oberflächen abwechselnd Knetmesser (22) und Abstreifmesser (21) befestigt sind, die einen Arbeitsteil (21a, 22a) aufweisen, der in einer Schraubenlinie mit bestimmtem Gang in Funktion der Drehrichtung des Rotors bewegt wird, und der seitlich abwechselnd auf die rechte und linke Seite des Flansches (20) geneigt ist.

12. Gerät nach Anspruch 11, **dadurch gekennzeichnet**, daß der Radius des Kreises, der durch das Ende des Arbeitsteils der Abstreifmesser (21) beschrieben wird, an den Radius des Kreisbogens (C3) angrenzt, der dem Profil der Rückseite (5c) der Zähne (5) entspricht.

13. Gerät nach Anspruch 11, **dadurch gekennzeichnet**, daß die Länge und die Neigung des Arbeitsteils (21a) der Abstreifmesser (21) der umlaufenden Ackerwerkzeuge mit großem Durchmesser (9) so festgelegt sind, daß das Ende des Arbeitsteils so nach wie möglich an den Zähnen (5) verläuft.

14. Gerät nach Anspruch 11, **dadurch gekennzeichnet**, daß die Knetmesser (22) seitlich in verschiedenen Winkeln derart geneigt sind, daß in vollständiger Schnitt des Bodens zwischen den Zähnen (5) erreicht wird.

15. Gerät nach Anspruch 6 und 11, **dadurch gekennzeichnet**, daß das Ende der Fräsmesser (24) der umlaufenden Ackerwerkzeuge mit kleinem Durchmesser (8) in den Wirkungsbereich der Abstreifmesser (21) der umlaufenden Ackerwerkzeuge mit großem Durchmesser (9) eindringt.

16. Gerät nach Anspruch 1, **dadurch gekennzeichnet**, daß das obere Ende (5d) der Zähne (5) am Ende eines Bogens von ungefähr 30° in Bezug auf die Horizontalebene angeordnet ist, die durch die Achse (X1) des Rotors läuft und über dieser Ebene, aber unterhalb der Horizontalebene, die durch den Schwenkbolzen (3) der Zähne (5) läuft, angeordnet ist.

17. Gerät nach Anspruch 1, **dadurch gekennzeichnet**, daß mehrere rotierende Umlaufwerkzeuge mit großem Durchmesser (9) in den Zwischenräumen der Zähne (5) angeordnet sind.

18. Gerät nach Anspruch 1, **dadurch gekennzeichnet**, daß die Zähne, die eine größere Länge aufweisen, zwischen den anderen (5) angeordnet sind.

19. Gerät nach Anspruch 1, **dadurch gekennzeichnet**, daß die Flansche (20, 23) der umlaufenden Ackerwerkzeuge mit kleinem Durchmesser im Winkel um die Hälfte desjenigen Winkels versetzt angeordnet sind, der in Bezug auf den Flansch des nächstliegenden umlaufenden Ackerwerkzeugs mit großem Durchmesser von zwei aufeinanderfolgenden Messern des gleichen Werkzeugs gebildet wird.

20. Gerät nach Anspruch 1, **dadurch gekennzeichnet**, daß die Flansche (23) der umlaufenden Ackerwerkzeuge mit kleinem Durchmesser (8) und die Flansche (20) der umlaufenden Ackerwerkzeuge mit großem Durchmesser (9) jeweils gleichmäßig graduell in der gleichen Richtung versetzt sind, so daß die entsprechenden Messer auf Schraubenlinien angeordnet sind.

21. Gerät nach Anspruch 1, **dadurch gekennzeichnet**, daß die Zähne (5) in Richtung des oberen Teils des Gehäuses (15) durch Rippen, die im Inneren des Gehäuses eingesetzt sind, verlängert sind.

22. Gerät nach Anspruch 1, **dadurch gekennzeichnet**, daß die Lage der Antriebswelle (7) der rotierenden Umlaufwerkzeuge (8, 9) verstellbar ist.

23. Gerät nach Anspruch 1, **dadurch gekennzeichnet**, daß die rotierenden Umlaufwerkzeuge (8, 9) schräg auf ihrer Antriebswelle (7) befestigt sind.

## Claims

1. Combined implement for crushing, grubbing, decompaction and working of the soil, comprising revolving agricultural tools of large and small diameters, integral with a transverse shaft (7) driven in rotation via the power take-off shaft of the pulling machine, and tines (5) with an interchangeable share, fastened to a frame (1) and inserted between the revolving agricultural tools whose working depth is determined by a spreading and flattening roller (12) ; the said revolving agricultural tools consisting of hubs (20, 23) at the periphery of which are mounted blades (21, 22, 24) working at different depths, characterized in that the revolving agricultural tools of large and small diameters are combined to form a rotor such that the tools of large diameter (9) are situated between the tines (5) and the tools of small diameter (8) are situated in the planes formed by these tines (5), and in that the tines (5) are connected to the frame (1) of the implement via a cover piece (17), a pivot pin (3) and a safety device (4) enabling them to be withdrawn above a given torque and in that the rotor is overhung by a casing (15) of small depth forming an integral part of the frame (1) of the implement, and in that the frame (1) of the implement is equipped, in front of the rotor, with a levelling bar (25) and, behind the tines (5), with an articulated levelling plate (13).

2. Implement according to Claim 1, characterized in that the profile of the front face (5a), forming a crushing counter knife, of the tines (5) consists, in the upper part, of an arc of a circle (C1) whose centre is situated on the axis (X1) of the rotor and whose radius (R1) is slightly greater than the minimum working radius (R2) of the revolving agricultural tools of small diameter (8) and, in the lower part, of an arc of a circle (C2) of the same radius (R1) as that of the upper part but whose centre is situated on an axis (X2) parallel to the axis (X1) of the rotor, offset in the vertical plane passing through the said axis (X1) by a distance (D), so as to obtain a gradual narrowing of the distance separating the front face (5a) of the tines (5) from the crushing blades (24) of the revolving agricultural tool of small diameter (8).

3. Implement according to Claims 1 and 2, characterized in that the working edge (6a) of the interchangeable share (6) of the tines (5) forms a breaking angle alpha relative to the tangent to the lower arc of a circle (C2) of the profile of the front face (5a) of the tines (5).

4. Implement according to Claim 1, characterized in that the working edge (6a) of the share (6) is situated entirely in front of the vertical plane passing through the axis (X1) of the rotor.

5. Implement according to Claims 1 and 3, characterized in that the interchangeable shares (6) are flush mounted in the lower end (5b) of the tines (5) and fixed against them by screws (19).

6. Implement according to Claim 1, characterized in that the revolving agricultural tools of small diameter (8) situated in the plane of the tines (5) essentially consist of hubs (23) at the periphery of which are mounted crushing blades (24) with a working part (24a) twisted into a helix, of a pitch determined as a function of the direction of rotation of the rotor, and inclined laterally and alternately to the left and to the right of the hubs (23).

7. Implement according to Claim 6, characterized in that the crushing blades (24) of the revolving agricultural tools of small diameter (8) are fastened on the side (23a) of their driving hub (23) opposite the direction of inclination of their working part (24a).

8. Implement according to Claim 1, characterized in that the revolving agricultural tools of small diameter (8) situated in the plane of the tines (5) essentially consist of hubs (23) at the periphery of which are mounted sets of two crushing blades, with working parts twisted into determined helices, of opposite pitches, inclined laterally in opposite directions.

9. Implement according to Claim 6 or 8, characterized in that the crushing blades, or the sets of crushing blades, are mounted in articulated fashion on their driving hub.

10. Implement according to Claim 6, 8 or 9, characterized in that fixed crushing blades, single or double, are mounted alternately with articulated crushing blades, single or double, on the same driving hub.

11. Implement according to Claim 1, characterized in that the revolving agricultural tools of large diameter (9) working between the tines (5) essentially consist of hubs (20) at the periphery of which are alternately mounted mixing blades (22) and scraping blades (21) with working part (21a and 22a) twisted into a helix of a pitch determined as a function of the direction of rotation of the rotor, inclined laterally and alternately to the left and to the right of the hub (20).

12. Implement according to Claim 11, characterized in that the radius of the circle described by the end of the working part of the scraping blades (21) is close to that of the arc of a circle (C3) corresponding to the profile of the rear part (5c) of the tines (5).

13. Implement according to Claim 11, characterized in that the length and inclination of the working part (21a) of the scraping blades (21) of the revolving agricultural tools of large diameter (9) are determined such that the end of the working part passes as near as possible to the tines (5).

14. Implement according to Claim 11, characterized in that the mixing blades (22) are inclined laterally at different angles so as to obtain a complete cut of the soil between the tines (5).

15. Implement according to Claims 6 and 11, characterized in that the end of the crushing blades (24) of the revolving agricultural tools of small diameter (8) penetrates into the working space of the scraper blades (21) of the revolving agricultural tools of large diameter (9).

16. Implement according to Claim 1, characterized in that the upper end (5d) of the tines (5) is situated at the end of an arc of approximately 30° relative to the horizontal plane passing through the axis (X1) of the rotor, and is situated above this plane but below the horizontal plane passing through the pivot axis (3) of the tines (5).

17. Implement according to Claim 1, characterized in that a plurality of revolving rotary tools of large diameter (9) are situated in the gap between the tines (5).

18. Implement according to Claim 1, characterized in that tines of larger length are mounted amongst the others (5).

19. Implement according to Claim 1, characterized in that the hubs (20 and 23) of the revolving agricultural tools of small diameter are offset angularly by half the angle formed by two consecutive blades of the same tool relative to the hub of the closest revolving agricultural tool of large diameter.

20. Implement according to Claim 1, characterized in that the hubs (23) of the revolving agricultural tools of small diameter (8) and those (20) of revolving agricultural tools of large diameter (9) are respectively offset regularly, in a stepwise manner, in the same direction such that the corresponding blades are situated on helices.

21. Implement according to Claim 1, characterized in that the tines (5) are extended towards the upper part of the casing (15) by ribs attached to the inside of the latter.

22. Implement according to Claim 1, characterized in that the position of the drive shaft (7) of the revolving rotary tools (8 and 9) can be adjusted.

23. Implement according to Claim 1, characterized in that the revolving rotary tools (8 and 9) are fixed obliquely on their drive shaft (7).

# FIG.1

EP 0 290 556 B1

# FIG.2

# FIG.3